Europäisches Patentamt

European Patent Office

Office européen des brevets

(11) Veröffentlichungsnummer: **0 218 959**
**A2**

(12) # EUROPÄISCHE PATENTANMELDUNG

(21) Anmeldenummer: 86113114.2

(51) Int. Cl.⁴: **H02G 11/02**

(22) Anmeldetag: 24.09.86

(30) Priorität: 01.10.85 DE 3534956
12.11.85 DE 3540012

(43) Veröffentlichungstag der Anmeldung:
**22.04.87 Patentblatt 87/17**

(84) Benannte Vertragsstaaten:
**DE FR GB IT**

(71) Anmelder: **Napierski, Reinhard**
**Talstrasse 18**
**D-6361 Niddatal 1(DE)**

(72) Erfinder: **Napierski, Reinhard**
**Talstrasse 18**
**D-6361 Niddatal 1(DE)**

(74) Vertreter: **Jochem, Bernd, Dipl.-Wirtsch.-Ing.**
**Patentanwälte Beyer & Jochem**
**Staufenstrasse 36**
**D-6000 Frankfurt/Main(DE)**

(54) **Vorrichtung zum Aufwickeln eines Kabels.**

(57) Die Vorrichtung zum Aufwickeln eines Kabels besteht aus einem Gehäuse (51) mit einer Ein-und Auslaufführung (58) für das Kabel (16) und einer drehbar im Gehäuse gelagerten Kabeltrommel (49), an welcher das eine Ende des Kabels festgelegt ist. Um das Kabel beim Aufwickeln auf die Kabeltrommel (49) exakt zu führen ist vorgesehen, daß die Kabeltrommel (12) mindestens zwei durch eine Zwischenwand (50) getrennte Wickelkammern (52, 54) hat und bei der zuerst gefüllten Wickelkammer (52) radial außerhalb der Zwischenwand (50) mindestens ein Kabelabweiser (60) angebracht ist. Letzterer kann durch eine Begrenzungsfläche oder ein Leitorgan (60) an der Ein-und Auslaufführung (58) gebildet sein. Er leitet das Kabel (16) nach dem Auffüllen der ersten Wickelkammer (52) über die Zwischenwand - (50) hinweg in die zweite Wickelkammer (54).

Fig. 7

## Vorrichtung zum Aufwickeln eines Kabels

Die Erfindung betrifft eine Vorrichtung zum Aufwickeln eines Kabels, bestehend aus einem Gehäuse mit einer Ein-und Auslaufführung für das Kabel und einer drehbar im Gehäuse gelagerten Kabeltrommel, an welcher das eine Ende des Kabels festgelegt ist.

Bei den gebräuchlichen Aufwickelvorrichtungen, wie sie z.B. in der DE-OS 25 44 828 und in dem DE-GM 79 12 019 beschrieben sind, wird das aufzuwickelnde Kabel in seiner Mitte an einer Zwischenwand einer Kabeltrommel festgelegt, so daß beim Gebrauch das Kabel durch zwei Ein-und Auslaufführungen hereingezogen oder herausgezogen wird. Diese Vorrichtungen haben den Nachteil, daß sie in der Mitte zwischen einem an das Kabel angeschlossenen Gerät und einem Stecker am Kabel sitzen, was z.B. bei einem mit der Hand bewegten Fön als störend empfunden wird.

Geht man von einer bestimmten aufzuwickelnden Kabellänge aus, so haben die vorstehend erwähnten Vorrichtungen mit zwei Ein-und Auslaufführungen den Vorteil, daß von vornherein nur jeweils die halbe Kabellänge in jeder der beiden Wickelkammern zu beiden Seiten der Zwischenwand aufgespult zu werden braucht. Selbst dann läßt sich aber das Problem nicht ganz vermeiden, daß sich während des Aufwickelns eines Kabels, insbesondere eines Flachkabels, die Windungen direkt übereinander legen und somit eine - schmale, aber radial große Wicklung bilden, die zur Verklemmung der Kabeltrommel im Gehäuse führen kann, bevor eine Wickelkammer auch über ihre Breite ganz ausgefüllt ist. Dieses Verhalten des Kabels beim Aufwickeln zwingt bisher dazu, die Wickelkammer mit einem entsprechend großen Durchmesser auszulegen, was störend und unvorteilhaft sein kann, z.B. wenn ein Kabelaufwickler oder ein Gerät mit Kabelaufwickler in die Hand genommen werden muß. Der genannte Mangel der sich auch in einer breiteren Wickelkammer ungewollt schmal aufbauenden Wicklung wirkt sich natürlich vor allem dann besonders nachteilig aus, wenn das Kabel mit seinem einen Ende an der Kabeltrommel festgelegt wird, so daß die gesamte aufzuwickelnde Kabellänge über eine einzige Ein-und Auslaufführung eingezogen wird.

Der Erfindung liegt die Aufgabe zugrunde, eine Vorrichtung der eingangs bezeichneten Art zu - schaffen, in welcher sich das Kabel beim Aufwickeln geordnet axial nebeneinander liegt, und diese Aufgabe wird erfindungsgemäß dadurch gelöst, daß die Kabeltrommel mindestens zwei durch eine radiale Zwischenwand getrennte Wickelkammern aufweist, und bei der ersten Wickelkammer, in welcher das Ende des Kabels festgelegt ist, radial außerhalb der Zwischenwand mindestens ein Abweiser angebracht ist, durch welchen das Kabel beim Aufwickeln nach dem Auffüllen der ersten Wickelkammer über den radial äußeren Rand der Zwischenwand hinweg in die zweite Wickelkammer überleitbar ist.

Die Erfindung nutzt zunächst das bisher unerwünschte Verhalten des Kabels, sich beim Aufwickeln radial übereinander zu legen, aus, sorgt aber einerseits dafür, daß die zuerst gewickelten Windungen in einem definierten axialen Bereich der Kabeltrommel, nämlich der ersten Wickelkammer, bleiben, und sorgt dann weiterhin durch den Abweiser dafür, daß nach einer bestimmten Anzahl Windungen, welche den Raum der ersten Winkelkammer bis zum äußeren Rand der Zwischenwand auffüllen, das Kabel in die zweite Wickelkammer übergeleitet wird, wo es sich dann wiederum in Windungen übereinander aufbauen kann. Für die meisten Anwendungen reichen zwei auf der Kabeltrommel aufgewickelte derartige Spulen. Wenn ein noch längeres Kabel über eine einzige Ein-und Auslaufführung aufgewickelt werden soll, können Abweiser verwendet werden, die z.B. eine Blattfeder oder ein anderes Federorgan mit verhältnismäßig weitem Federweg aufweisen, welches in der Lage ist, das Kabel nicht nur über eine erste Zwischenwand in die zweite Wickelkammer hinein, sondern nach deren Auffüllung auch noch über eine zweite Zwischenwand in eine dritte Wickelkammer hinein zu drängen.

Im Sinne der vorliegenden Erfindung kann das eine Ende des Kabels, welches an der Kabeltrommel in der ersten Wickelkammer festgelegt ist, auch eine beliebige Stelle, insbesondere die Mitte, eines Kabels sein, welche in bekannter Weise bei Aufwickelvorrichtungen mit zwei Ein-und Auslaufführungen an einer mittleren radialen Wand der Kabeltrommel festgelegt ist. In diesem Fall hat die Kabeltrommel z.B. vier Wickelkammern. Beim Einziehen des Kabels läuft dieses zunächst durch jede der beiden Ein-und Auslaufführungen in eine der beiden inneren Wickelkammern ein. Wenn diese gefüllt sind, leiten die Abweiser die beiden aufzuwickelnden Kabelenden jeweils in eine der beiden axial äußeren Wickelkammern. Wenn bei einer derartigen Wickelvorrichtung mit zwei Ein-und Auslaufführungen die Mitte des Kabels in der Nabe der Kabeltrommel festgelegt wird, und die beiden Kabelenden von dort zunächst in die beiden äußeren der vier Wikkelkammern eintreten, können auch zunächst diese gefüllt und die beiden Kabelenden dann durch Abweiser in die beiden inneren Wickelkammern übergeleitet werden.

Die Erfindung wird nachstehend anhand der Zeichnung näher erläutert. Es zeigen:

Fig. 1 einen Längsschnitt durch eine am freien Ende des Anschlußkabels eines elektrischen Geräts angebrachte Kabelaufwickelvorrichtung mit lösbar festgelegtem elektrischem Stecker;

Fig. 2 eine Draufsicht auf die Wickelvorrichtung nach Fig. 1;

Fig. 3 einen Längsschnitt durch eine weitere Ausführungsform einer Wickelvorrichtung;

Fig. 4 eine Draufsicht auf eine Wickelvorrichtung nach Fig. 1 und Fig. 3, die im Bereich ihrer Spiralfeder im Schnitt dargestellt ist;

Fig. 5 eine Seitenansicht einer Wickelvorrichtung mit einer einstückig mit dem Gehäuse ausgebildeten Sperrklinke;

Fig. 6 eine Draufsicht auf die Wickelvorrichtung nach Fig. 5, die im Bereich der Sperrklinke im Schnitt dargestellt ist;

Fig. 7 und 8 einen Längsschnitt durch einen Kabelaufwickler mit mindestens zwei Wickelkammern.

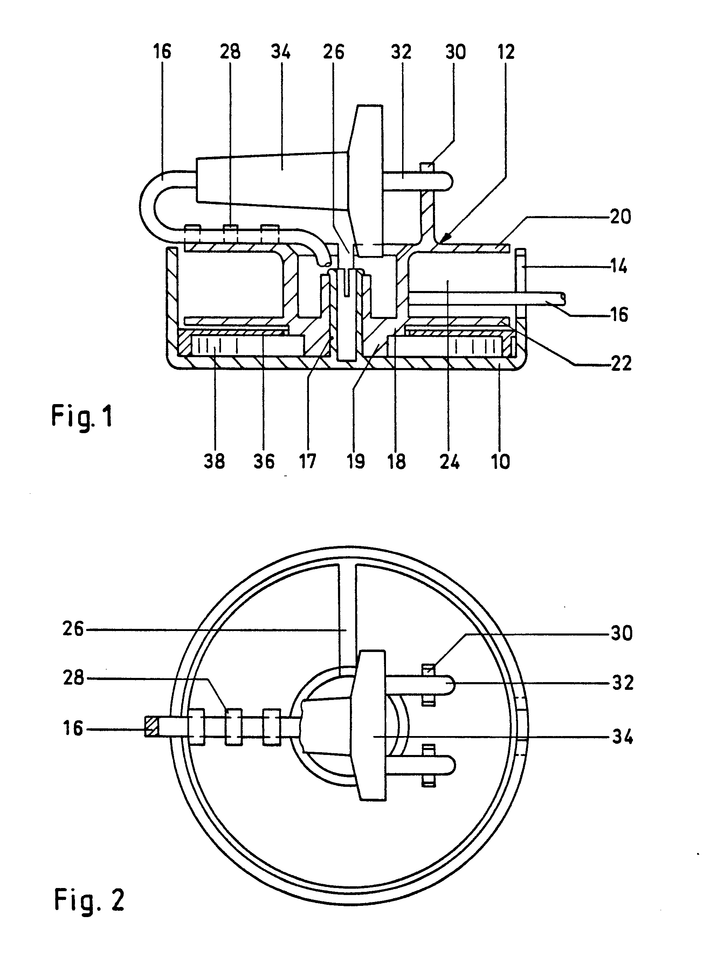

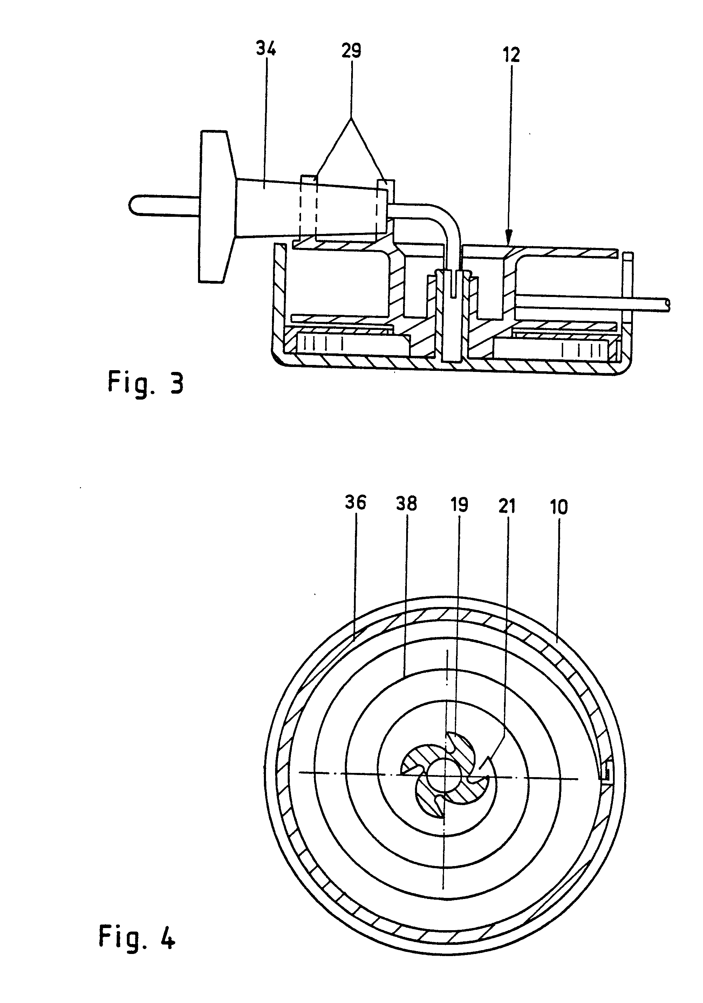

Die in Fig. 1 gezeigte Vorrichtung zum Aufwickeln eines Kabels hat ein einteiliges Gehäuse 10. Es erstreckt sich so hoch, daß eine darin gelagerte Kabeltrommel 12 versenkt ist. Das Gehäuse 10 hat eine Ein-und Auslaufführung 14 für das mit 16 bezeichnete Kabel, welches auf die Kabeltrommel 12 aufwickelbar ist. Letztere gliedert sich in Nabe 18 und daran ansetzende Wände 20, 22 auf. Die sich radial erstreckenden Wände 20, 22 bilden die Wickelkammer 24, in der das aufgewickelte Kabel lagert. Die Nabe 18 ist auf einem zentralen Zapfen 17 am Gehäuse 10 mit radial elastischen Haltenasen am freien Ende drehbar gelagert und axial gehalten. Sie weist unterhalb der unteren Endwand 22 einen Hakenstern 19 (Fig. 4) auf, der das innere Ende 21 einer außen am Gehäuse festgelegten Spiralfeder 38, wenn diese entspannt ist, bei Rechtsdrehung radial elastisch zurückdrängt, aber bei Linksdrehung erfaßt, und bei weiterer Drehung die Feder spannt.

Die Kabeltrommel 12 hat einen radialen Einlegeschlitz 26, der sich vom äußeren Rand der freiliegenden oberen Endwand 20 bis durch die oben gemäß Fig. 1 und 3 topfförmig erweiterte, einen oben offenen Hohlraum umschließende Nabe 18 erstreckt, und besitzt auf der oberen Endwand 20 angeformte, einseitig offene Halterungen 28 für das Kabel 16 und Halterungen 30 für die Kontaktstifte 32 des elektrischen Steckers 34. Das Kabel 16 wird eingelegt, wenn die Kabeltrommel 12 mit ihrem Einlegeschlitz 26 mit der nach oben offenen Ein-und Auslaufführung 14 fluchtet. Das Kabel 16 wird dann zu den Halterungen 28 geführt und dort festgeklemmt. Somit ist der Stecker 34 frei bewegbar und kann wahlweise in eine nicht gezeigte Steckdose eingesteckt oder, wie in Fig. 1 gezeigt, fixiert gehalten werden, indem die Kontaktstifte 32 in die Halterung 30 einrasten.

In dem Gehäuse 10 ist eine Federaufnahme 36 befestigt, die eine Feder 38 abdeckt und sie außen arretiert. Das innere Ende 21 der Feder 38 steht frei im Innenraum, jedoch in einem Bereich, in dem es von den Haken 19 erfaßt wird. Selbstverständlich kann die Federaufnahme auch an der Kabeltrommel 12 und der Hakenstern am Gehäuse befestigt sein.

Zum Wechseln des Kabels muß die Kabeltrommel 12 aus dem Gehäuse 10 herausgenommen werden, um dieses außerhalb abzuwickeln. Setzt man ein neues Kabel ein, muß man nur das erste Mal das Kabel von Hand auf die Trommel aufwickeln.

In Fig. 3 ist eine weitere Variante gezeigt, die ermöglicht, den Stecker 34, ohne ihn aus seiner Halterung 29 zu nehmen, in die Steckdose einzustecken. Hierbei zeigt der Stecker 34 in Bezug auf die Kabeltrommel 12 raidal nach außen; es besteht auch die Möglichkeit, den Stecker 34 mit axialer Ausrichtung in einer entsprechenden Halterung anzuordnen. Die Halterung 29 klemmt den Stecker 34 so fest, daß er beim Einstecken und Herausziehen aus der Steckdose seinen fixierten Platz beibehält.

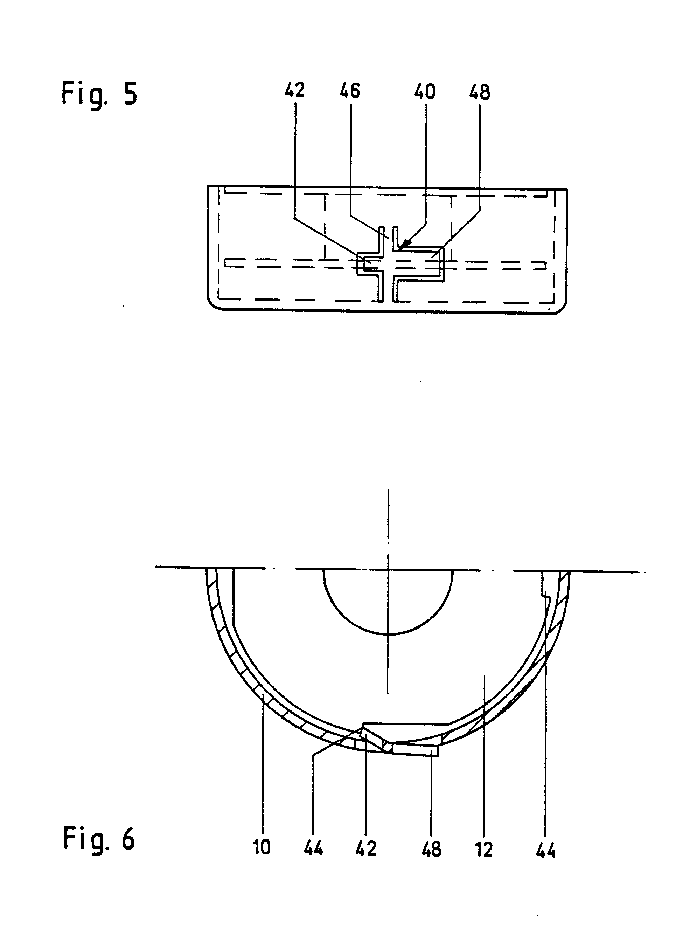

In Fig. 5 und 6 ist eine Sperrklinke 40 gezeigt, die einstückig mit dem Gehäuse 10 ausgebildet ist. Im Beispielsfall besteht die Sperrklinke 40 aus einer Rastnase 42, die in Aussparungen 44 der Kabeltrommel 12 eingreift, einem Federbereich 46 und einer Druckplatte 48. Die Rastnase 42 zeigt in eine Richtung schräg nach innen und sperrt die Kabeltrommel 12 gegen Drehung in Aufwickelrichtung. Wünscht man das Kabel einzuziehen, so wird auf die Druckplatte 48 gedrückt. Dann gibt die Rastnase 42 die Kabeltrommel 12 frei, und die Spiralfeder 38 zieht das Kabel auf die Kabeltrommel 12 zurück. Beim Abziehen des Kabels von der Kabeltrommel 12 braucht die Druckplatte 48 nicht betätigt zu werden, da durch den Federbereich 46 die Rastnase 42 immer nach innen vorgespannt ist, so daß die Rastnase 42 die Kabeltrommel 12 sofort arretiert, wenn der Zug aufhört.

Selbstverständlich sind auch andere konstruktive Varianten von Sperrklinken möglich, die einstückig mit dem Gehäuse hergestellt werden können. Im Beispielsfalle wird der Federbereich 46 als Torsionsfeder genutzt, die gleichzeitig Drehachse der Sperrklinke 40 ist. Es ist denkbar, den Federbereich als Blattfeder zu gestalten, so daß der Drehpunkt auch im Blattfederbereich liegen kann.

Es versteht sich weiterhin, daß die einstückige Anbringung der Sperrklinke am Gehäuse unabhängig von der Gestaltung der Kabeltrommel ist und auch unabhängig davon, wo die Sperrklinke an der Kabeltrommel angreift. Eine derartige Sperrklinke kann daher auch bei Aufwickelvorrichtungen der eingangs erwähnten Art mit zwei Ein-und Auslaufführungen zur Anwendung kommen, und auch dann, wenn die Aufwickelvorrichtung nicht eine besondere Einheit ist, sondern Teil eines Geräts, z.B. eines Föns, wobei im letzteren Fall die Sperrklinke einstückig mit dem Gehäuse des Föns hergestellt ist.

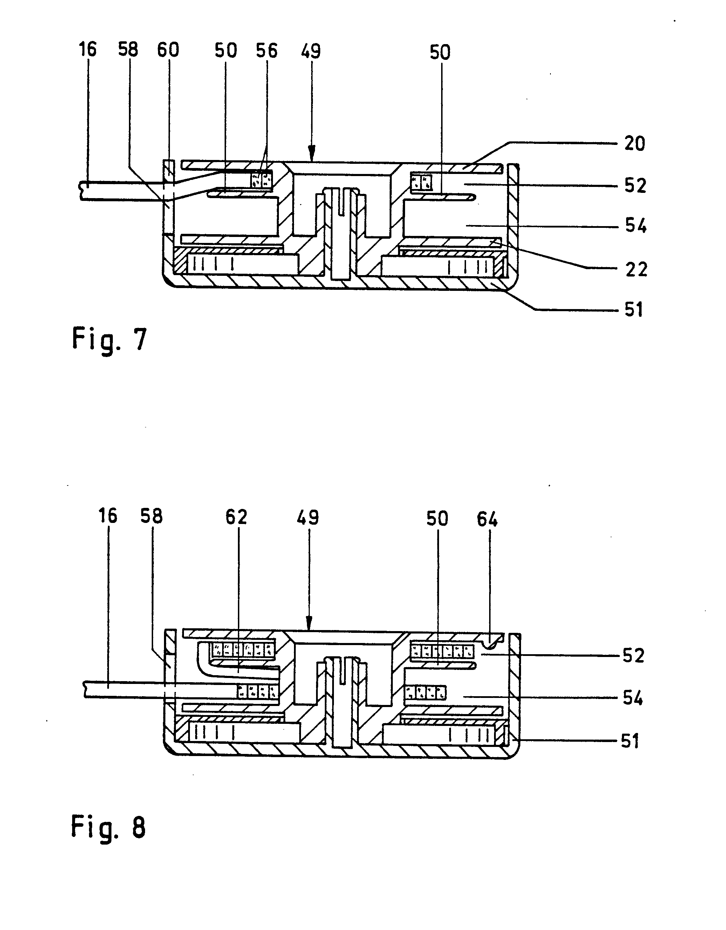

In Fig. 7 und 8 ist eine Aufwickelvorrichtung gezeigt, bei der die Kabeltrommel zwischen den sich radial erstreckenden Wänden 20,22 eine Zwischenwand 50 aufweist. Sie unterteilt den Raum zwischen den beiden Wänden 20, 22 in zwei Wickelkammern 52 und 54.

In Fig. 7 ist eine Phase des Aufwickelns dargestellt, und zwar wird das Kabel 16 in die Wickelkammer 52 so eingelegt, daß es sich von innen aufbauen kann. Es wurden bereits zwei Windungen 56 aufgewickelt. Um die nächsten Windungen aufzuwickeln, zieht die Kabeltrommel durch ihre Drehung das Kabel 16 in die Wickelkammer 52 ein. Durch die gegenüber der Wickelkammer 52 versetzte Ein-und Auslaufführrung 58, insbesondere durch die versetzte Wand 60, wird das Kabel 16 jedoch genau in Flucht auf die Zwischenwand 50 geführt, so daß, wenn die Wickelkammer 52 gefüllt ist, das Kabel 16 zwangsweise auf die Zwischenwand 50 aufläuft, sich dort nicht halten kann und von selbst in die Wickelkammer 54 hineinfält.

In Fig. 8 sieht man den Übergang 62 des Kabels 16 in die Wickelkammer 54. Da der Übergang 62 ins Innere der Wickelkammer 54 führt, kann sich das Kabel 16 jetzt wieder von innen her aufbauen.

In diesem Beispiel einer Kabeltrommel 49 und eines Gehäuses 51 der gezeigten Form ist es erforderlich, einen Versatz zwischen der ersten Wickelkammer 52 und der Ein-und Auslaufführung 58 zu haben. Die Größe des Versatzes ist jedoch von den jeweiligen Durchmessern der Ein-und Auslaufführung 58 und der Zwischenwand 50 abhängig. Es besteht auch die Möglichkeit, daß bei voller Wickelkammer Abweiser 64 die obere Wicklung in die Wickelkammer 54 herüber drücken; hierbei ist der Versatz der Ein-und Auslaufführung 58 nicht erforderlich. Der Abweiser 64 kann so gestaltet sein, daß er am ganzen Umfang oder segmentartig an der Wandung 20 ausgebildet ist.

Es besteht auch die Möglichkeit, eine Kabeltrommel mit mehreren Wickelkammern, z.B. drei, auszulegen. Hierbei ist es jedoch erforderlich, daß der Abweiser 64 jeweils in der Wikkelkammer vorhanden sein muß, in der das Kabel 16 auf die nächste herüber gedrückt wird, also in der letzten Wickelkammer ist ein Abweiser 64 nicht erforderlich. Zum besseren und genauen Herüberdrücken des Kabels 16 von einer Kammer in die andere können in der jeweiligen Zwischenwand Aussparungen bzw. Versenkungen ausgebildet sein.

**Ansprüche**

1. Vorrichtung zum Aufwickeln eines Kabels, bestehend aus einem Gehäuse mit einer Ein-und Auslaufführung für das Kabel und einer drehbar im Gehäuse gelagerten Kabeltrommel, an welcher das eine Ende des Kabels festgelegt ist, **dadurch gekennzeichnet**, daß die Kabeltrommel (12, 49) mindestens zwei durch eine radiale Zwischenwand (50) getrennte Wickelkammern (52, 54) aufweist, und bei der ersten Wickelkammer (52), in welcher das Ende des Kabels (16) festgelegt ist, radial außerhalb der Zwischenwand (50) mindestens ein Abweiser (60, 64) angebracht ist, durch welchen das Kabel (16) beim Aufwikkeln nach dem Auffüllen der ersten Wickelkammer (52) über den radial äußeren Rand der Zwischenwand (50) hinweg in die zweite Wickelkammer (54) überleitbar ist.

2. Vorrichtung nach Anspruch 1, **dadurch gekennzeichnet**, daß mindestens ein Abweiser (60) durch ein Leitorgan am Gehäuse (10, 51) gebildet ist, welches das Kabel (16) beim Einwickeln in die erste Wickelkammer (52) in Richtung gegen die Zwischenwand (50) lenkt.

3. Vorrichtung nach Anspruch 2, **dadurch gekennzeichnet**, daß das Leitorgan (60) durch eine Fläche an der Ein-und Auslaufführung (58) gebildet ist.

4. Vorrichtung nach Anspruch 3, **dadurch gekennzeichnet**, daß die Ein-und Auslaufführung (58) radial außerhalb der zweiten Wickelkammer (54) angeordnet ist und sich bis etwa zur halben Breite des Kabels (16) über die Zwischenwand (50) hinaus in den Bereich radial außerhalb der ersten Wickelkammer (52) erstreckt.

5. Vorrichtung nach Anspruch 1, **dadurch gekennzeichnet**, daß mindestens ein Abweiser (64) an der Kabeltrommel (12, 49) angebracht ist.

6. Vorrichtung nach Anspruch 1, **dadurch gekennzeichnet**, daß die erste Wickelkammer (52) axial schmaler und die zweite Wickelkammer (54) breiter ist als die doppelte Breite des Kabels (16).

7. Vorrichtung nach Anspruch 1, **dadurch gekennzeichnet**, daß am radial äußeren Rand einer Begrenzungswand (20, 22) einer Wickelkammer (24, 52, 54) der durch eine Spiralfeder (38) rotierend antreibbaren Kabeltrommel (12, 49) eine mit einer Anschlagkante versehene Aussparung (44) angebracht ist, in welche eine einstückig mit dem Gehäuse (10, 51) ausgebildete Sperrklinke (40) einrastbar ist.

8. Vorrichtung nach Anspruch 7, **dadurch gekennzeichnet**, daß die Sperrklinke (40) aus einer Rastnase (42), einem Federbereich (46) und einer Betätigungs-Druckplatte (48) besteht.

9. Vorrichtung nach Anspruch 8, **dadurch gekennzeichnet**, daß der Federbereich (46) gleichzeitig die Drehachse der Sperrklinke (40) ist.

10. Vorrichtung nach Anspruch 1, **dadurch gekennzeichnet**, daß das an der Kabeltrommel (12, 49) festgelegte Kabelende durch einen Kabelausgang (46) axial aus der Kabeltrommel (12, 49) herausgeführt und auf deren Außenseite durch Halteglieder (28,29,30) festlegbar ist.

Fig. 1

Fig. 2

Fig. 3

Fig. 4

**Fig. 5**

**Fig. 6**

Fig. 7

Fig. 8